# EUROPEAN PATENT APPLICATION

(11) **EP 4 414 938 A1**
(43) Date of publication of application: **14.08.2024**
(21) Application number: 24155505.1
(22) Date of filing: 02.02.2024
(51) Int. Cl.: G06T 7/73

(54) **METHOD FOR DETERMINING POSE OF TARGET OBJECT, AND COMPUTING DEVICE IMPLEMENTING THE SAME**

(30) Priority: 10.02.2023 TW 112104766
(71) Applicant: Solomon Technology Corporation, Taipei City 11494 (TW)
(72) Inventor: CHEN, Cheng-Lung, 11494 Taipei City (TW); NGUYEN, Xuan Loc, 11494 Taipei City (TW); BRILIAN, Tafjira Nugraha, 11494 Taipei City (TW); Manh Quan, NGUYEN, 11494 Taipei City (TW); Chieh, TSAI, 11494 Taipei City (TW)
(74) Representative: Murgitroyd & Company

(57) **Abstract**

A method for determining a pose of a target object is to be implemented by a computing device that stores a database related to a specific type of object. The database includes a plurality of template images. The method includes: obtaining an input image that contains the target object belonging to the specific type; selecting a matching image that best matches with the input image from among the template images; performing a keypoint matching procedure to identify a plurality of first feature points that are related an the appearance of the target object shown in the input image, and a plurality of second feature points that are shown in the matching image and that respectively match with the first feature points; and generating a pose-determination result that indicates the pose of the target object based on relationships among the first feature points and the second feature points.

## Description

The disclosure relates to a method for determining a pose of a target object, and more particularly to a method for determining a pose of a target object that involves image recognition, and a computing device implementing the same.

Determining a pose (i.e., position and orientation) of an object is an important step in various automated operations. In one example, during an operation of using a robotic arm to grab an object, the movement of the robotic arm is determined based on the pose of the object so that the robotic arm can stably grab the object from a correct angle. In another example, during an operation of processing an object with automation, the position and/or path of processing is required to be adjusted based on the pose of the object to ensure accuracy of processing.

Therefore, an object of the disclosure is to provide a method for determining a pose of a target object.

According to an aspect of the disclosure, there is provided a method for determining a pose of a target object according to claim 1.

According to an aspect of the disclosure, there is provided a computing device for determining a pose of a target object according to claim 8. Other features and advantages of the disclosure will become apparent in the following detailed description of the embodiment(s) with reference to the accompanying drawings. It is noted that various features may not be drawn to scale.
Figure 1 is a schematic view illustrating a computing device for determining a pose of a target object, a database, and a capturing device according to an embodiment of the disclosure.
Figure 2 is a flow chart illustrating a method for determining a pose of a target object according to an embodiment of the disclosure.

Before the disclosure is described in greater detail, it should be noted that where considered appropriate, reference numerals or terminal portions of reference numerals have been repeated among the figures to indicate corresponding or analogous elements, which may optionally have similar characteristics.

Throughout the disclosure, the term "electrically connected to" may refer to a direct connection among a plurality of electrical apparatus/devices/equipment via an electrically conductive material (e.g., an electrical wire), or an indirect connection between two electrical apparatus/devices/equipment via another one or more apparatus/devices/equipment, or wireless communication.

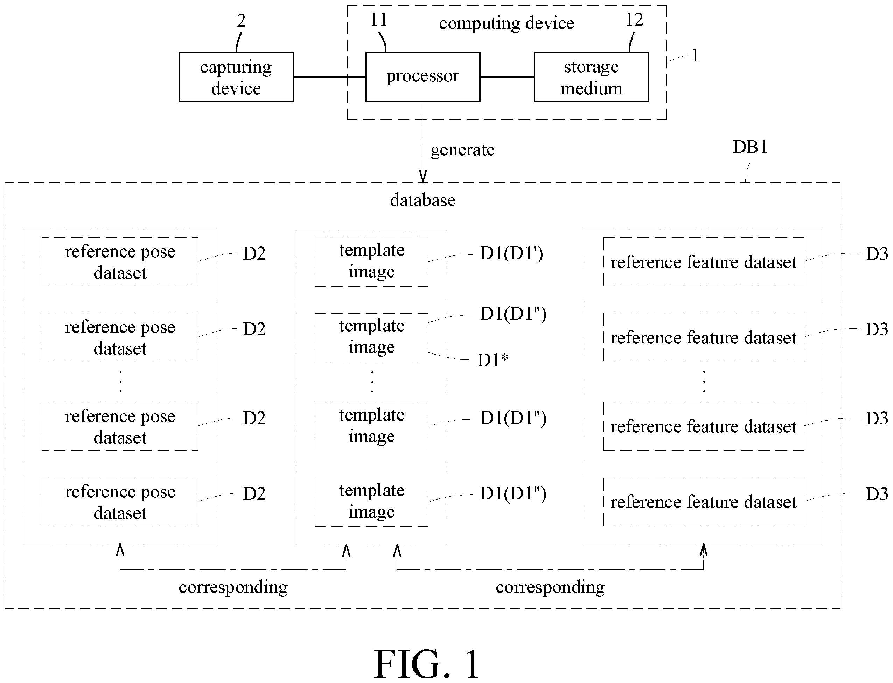

Referring to Figure 1, a computing device 1 for determining a pose of a target object according to an embodiment of the disclosure may be implemented as a personal computer, a laptop, a server, etc. The computing device 1 includes a processor 11, and a storage medium 12 that is electrically connected to the processor 11. It should be noted that the term "pose" represents a position and an orientation of an object.

In this embodiment, the processor 11 is a chip that has data computing and processing functions (i.e., an integrated circuit), and may include, but is not limited to, a central processing unit (CPU). The storage medium 12 is a data storage device (e.g., a hard drive) for storing digital data. In some embodiments, the processor 11 may be implemented as a collection of a plurality of chips, and the storage medium 12 may be implemented as a collection of a plurality of computer-readable storage media of the same type or different types, but the disclosure is not limited to such. In some embodiments, the computing device 1 may be implemented as an electronic device such as a smart phone or a tablet. Therefore, the actual implementation of the computing device 1 in terms of hardware is not limited to this embodiment.

In this embodiment, the processor 11 is configured to generate a database (DB1) as shown in Figure 1, and to store the database (DB1) in the storage medium 12. Specifically, the database (DB1) is related to objects of a specific type (e.g., objects of a specific model or objects complying with a set of specific specifications, etc.), and is generated by the processor 11 implementing a first stage of a method for determining a pose of a target object which belongs to the specific type according to some embodiments of the disclosure; that is to say, before the processor 11 performs the first stage of the method, the database (DB1) is not yet generated and stored in the storage medium 12. It should be noted that Figure 1 shows one example of the database (DB1) in advance for the purpose of facilitating explanation of an operation of the computing device 1. Furthermore, the processor 11 is adapted to be electrically connected to a capturing device 2 (e.g., a camera) that is configured to capture a video, and the processor 11 is configured to receive the video from the capturing device 2, and to determine a pose (e.g., position and orientation) of an object in the video based on the database (DB1) by implementing a second stage of the method for determining a pose of a target object.

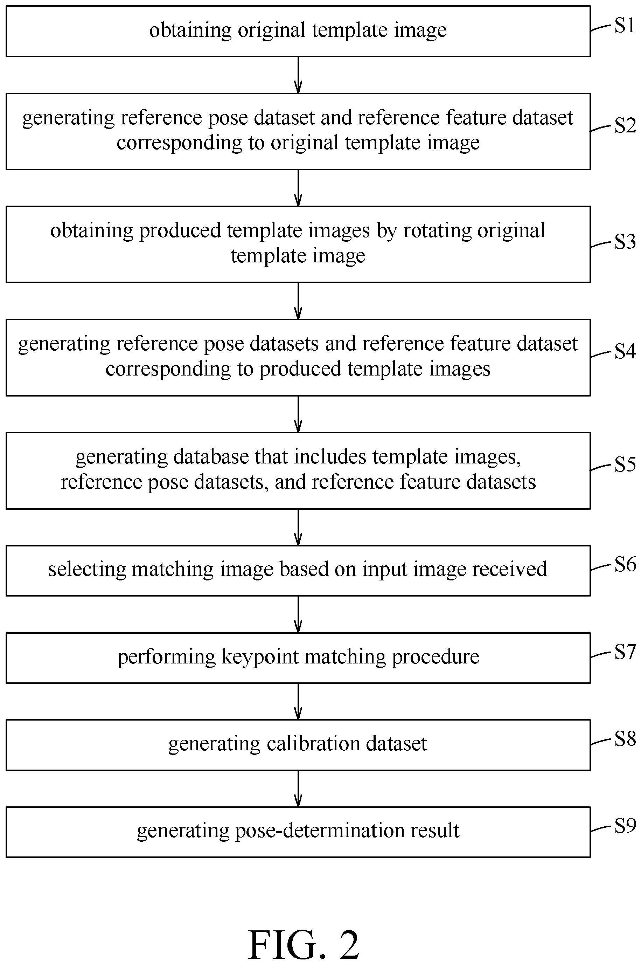

Further referring to Figure 2, the method for determining a pose of a target object implemented by the computing device 1 is provided. The method includes steps S1 to S9, where steps S1 to S5 relate to the first stage of the method, and steps S6 to S9 relate to the second stage of the method.

In step S1, the processor 11 obtains a template image (D1), where the template image (D1) is considered as an original template image (D1') in this embodiment, and the original template image (D1') contains a reference object.

Specifically, the reference object contained in the original template image (D1') also belongs to the specific type (e.g., the reference object is a work piece or component of the specific type) that is to be determined by the computing device 1 using the method later on. For example, the specific type is "#6-32 UNC 2B" defined by the Unified Thread Standard (UTS), and both the reference object and the target are screws complying with #6-32 UNC 2B. An angle of the reference object shown in the original template image (D1') is considered as a reference angle of the specific type from a capturing perspective when the original template image (D1') was captured. To describe in further detail, the capturing perspective is a perspective of a camera device (e.g., the capturing device 2 in Figure 1, but is not limited to such) relative to the reference object when the original template image (D1') was captured. It should be noted that the original template image (D1') is used by the processor 11 to generate the database (DB1) that is related to the specific type, so as to determine the pose of other objects that belong to the specific type (i.e., other objects that have substantially the same appearance as the reference object). Therefore, the reference object itself is not necessarily an actual target to be determined by the computing device 1 using the method.

Furthermore, the original template image (D1') is a digital image that has a plurality of feature markers, and the feature markers respectively define a plurality of feature parts of the reference object (hereinafter referred to as "reference feature parts") shown in the original template image (D1'). Each reference feature part is a part of an appearance of the reference object in the original template image (D1'), where the part of the appearance of the reference object is suitable as a target to be identified by computer vision of the computing device 1, such as a pattern or an outline of the reference object shown in the original template image (D1'), or a combination thereof, but the disclosure is not limited to such. Furthermore, the feature markers may be virtual markers that are added to the original template image (D1') through manual operation, but the disclosure is not limited to such.

In this embodiment, the processor 11 obtains the original template image (D1') by reading the storage medium 12 under control of a user, that is to say, the original template image (D1') is pre-stored in the storage medium 12. In some embodiments, the processor 11 may be electrically connected to an electronic device (not shown, such as the camera device or a computer), and receive the original template image (D1') from the electronic device. In some embodiments, the processor 11 may be electrically connected to an external storage device (not shown, such as a memory card or a flash drive) storing the original template image (D1'), and obtain the original template image (D1') from the external storage device.

After the processor 11 obtains the original template image (D1'), the flow proceeds to step S2.

In step S2, the processor 11 generates, based on the original template image (D1'), a reference pose dataset (D2) that corresponds to the original template image (D1'), and a reference feature dataset (D3) that corresponds to the original template image (D1').

In this embodiment, the reference pose dataset (D2) that corresponds to the original template image (D1') is implemented in a form of a matrix, and indicates a pose of the reference object shown in the original template image (D1') (i.e., a pose of an object of the specific type at the reference angle when viewed from the capturing perspective). Specifically, the reference pose dataset (D2) indicates the pose of the reference object shown in the original template image (D1') using six degrees of freedom in three-dimensional space. The pose indicated by the reference pose dataset (D2) may be a coordinate set of a virtual three-dimensional coordinate system that is defined based on the capturing perspective, and may be considered as a reference pose of an object belonging to the specific type when viewed from the capturing perspective. For example, an object belonging to the specific type at the reference pose has a coordinate set at an origin of the virtual three-dimensional coordinate system, and an orientation thereof in each of the three dimensions is equal to zero (i.e., the yaw, the pitch and the roll are all equal to zero).

In this embodiment, the reference feature dataset (D3) that corresponds to the original template image (D1') is implemented as a vector that includes a plurality of components (e.g., 2304 components), and indicates an appearance feature of the reference object (an object of the specific type) at the reference angle shown in the original template image (D1') using the components, where the appearance feature would only exist when an object belonging to the specific type is at the reference pose when viewed from the capturing perspective. For example, the appearance feature may be a plurality of coordinates and/or facing directions respectively of the reference feature parts in the original template image (D1'), and the appearance feature may show relative positional relationship among the reference feature parts when the reference object is at the reference pose when viewed from the capturing perspective, but the disclosure is not limited to such.

In this embodiment, the processor 11 inputs the original template image (D1') to a convolutional neural network that was pre-trained, so as to obtain the reference feature dataset (D3) as an output. That is, the reference feature dataset (D3) is the analysis result of the original template image (D1') obtained by the processor 11 using the convolutional neural network. Since the convolutional neural network is not the emphasis of this disclosure, and is well-known to one having ordinary skill in the art, it will not be described in further detail for the sake of brevity.

After the processor 11 generates the reference pose dataset (D2) and the reference feature dataset (D3) that correspond to the original template image (D1'), the flow proceeds to step S3.

In step S3, the processor 11 rotates the original template image (D1') N times so as to respectively generate a number N of template images (D1) that are different from the original template image (D1'), and each of the template images (D1) contains the reference object. In this embodiment, the number N of template images (D1) generated by rotating the original template image (D1') N times are considered as a number N of produced template images (D1"). Specifically, N is an integer that is greater than one, and the rotation may be clockwise or counter-clockwise.

To describe in further detail, the processor 11 rotates the original template image (D1') multiple times (i.e., N times) based on a predetermined angle, and one of the produced template images (D1") is generated every time the original template image (D1') is rotated. In this embodiment, N is equal to 35, and the predetermined angle is equal to 10 degrees. Therefore, a first one of the produced template images (hereinafter referred to as "first produced template image") (D1") generated by the processor 11 shows a result of the original template image (D1') being rotated by 10 degrees (clockwise for example), and a second one of the produced template images (hereinafter referred to as "second produced template image") (D1") generated by the processor 11 shows a result of the original template image (D1') being further rotated by 10 degrees (i.e., being rotated by 20 degrees clockwise in total), and so on. As such, the angle of the reference object (hereinafter referred to as "display angle of the reference object") shown in the first produced template image (D1") is deviated by 10 degrees clockwise with respect to the display angle of the reference object shown in the original template image (D1'). Similarly, the display angle of the reference object shown in the second produced template image (D1") is deviated by 10 degrees clockwise with respect to the display angle of the reference object shown in the first produced template image (D1"), and is deviated by 20 degrees clockwise with respect to the display angle of the reference object shown in the original template image (D1'), and so on. Eventually, in this embodiment, the processor 11 obtains a total of 36 template images (D1) by rotating the original template image (D1') for a total of 35 times to generate 35 produced template images (D1"). That is to say, the 36 template images (D1) include the original template image (D1') and the 35 produced template images (D1"), and the display angle of the reference object in each of the template images (D1) is deviated by 10 degrees with respect to a previous one or a posterior one of the template images (D1).

It should be noted that the predetermined angle, and the number of times of rotation (i.e., the N times) for rotating the original template image (D1') by the processor 11 are not limited to the abovementioned example. In other embodiments, the predetermined angle may be any angle that is smaller than 25 degrees, as long as the relationship between the number of template images (D1) and the predetermined angle satisfies a condition that the number of template images (D1) multiplied by the predetermined angle is equal to 360 degrees.

To describe in further detail, in this embodiment, the template images (D1) correspond respectively to different deflection angles that are relative to the reference angle in which the reference object was captured. That is, each of the deflection angles is a difference between the display angle of the reference object in the corresponding one of the template images (D1) and the display angle of the reference object in the original template image (D1'). In one example of this embodiment, the deflection angle that corresponds to the original template image (D1') is equal to 0 degrees, and the rest of the deflection angles that correspond respectively to the produced template images (D1") are deviated by 10 degrees from one to the next (i.e., 10 degrees, 20 degrees, 30 degrees, ..., and 350 degrees), but the disclosure is not limited to such.

After the processor 11 generates the produced template images (D1"), the flow proceeds to step S4.

In step S4, the processor 11 further generates, based on the produced template images (D1"), multiple reference pose datasets (D2) that correspond respectively to the produced template images (D1"), and multiple reference feature datasets (D3) that correspond respectively to the produced template images (D1").

Similar to step S2, in this embodiment, each of the reference pose datasets (D2) is implemented in a form of a matrix, and indicates the pose of the reference object shown in the corresponding one of the produced template images (D1") (i.e., the pose of an object of the specific model at the deflection angle that corresponds to the corresponding one of the produced template images (D1") when viewed from the capturing perspective). Specifically, each of the reference pose datasets (D2) indicates the pose of the reference object shown in the corresponding one of the produced template images (D1") using the six degrees of freedom in three-dimensional space. Since the produced template images (D1") were obtained by rotating the original template image (D1') by the predetermined angle multiple times, respectively, the reference pose datasets (D2) that correspond respectively to the produced template images (D1") may also be obtained by the processor 11 by rotating the reference pose dataset (D2) that corresponds to the original template image (D1') by the predetermined angle multiple times.

Similar to step S2, in this embodiment, with respect to the produced template images (D1"), each of the reference feature datasets (D3) is implemented as a vector that includes a plurality of components (e.g., 2304 components), and indicates the appearance feature of the reference object (an object belonging to the specific type) in the corresponding one of the produced template images (D1") using the components, where the appearance feature only exists when an object belonging to the specific type is deviated from the reference pose by the deflection angle (e.g., 10 degrees) that corresponds to the corresponding one of the produced template images (D1") (e.g., the first produced template image (D1")) when viewed from the capturing perspective. For example, the appearance feature may be a plurality of coordinates and/or facing directions respectively of the reference feature parts in the corresponding one of the produced template images (D1"), and the appearance feature may show relative positional relationship among the reference feature parts when the reference object is deviated from the reference pose by the deflection angle (e.g., 10 degrees) when viewed from the capturing perspective, but the disclosure is not limited to such.

Furthermore, in this embodiment, the processor 11 inputs each of the produced template images (D1") to the convolutional neural network, so as to obtain the reference feature datasets (D3) as output. That is, each of the reference feature datasets (D3) is the analysis result of the corresponding one of the produced template images (D1") obtained by the processor 11 using the convolutional neural network.

After the processor 11 generates multiple reference pose datasets (D2) that correspond respectively to the produced template images (D1"), and multiple reference feature datasets (D3) that correspond respectively to the produced template images (D1 "), the flow proceeds to step S5.

In step S5, the processor 11 generates the database (DB1) that is related to the specific type, and stores the database (DB1) in the storage medium 12. Specifically, in this embodiment, the database (DB1) includes the template images (D1) that correspond respectively to the different deflection angles (i.e., the original template image (D1') and the produced template images (D1")), the reference pose datasets (D2) that correspond respectively to the template images (D1), and the reference feature datasets (D3) that correspond respectively to the template images (D1).

After the processor 11 stores the dataset (DB1) in the storage medium 12, the flow proceeds to step S6.

In step S6, when the processor 11 obtains an input image that contains a target object which belongs to the specific type, the processor 11 selects a matching image (D1*) that best matches with the input image from among the template images (D1) in the database (DB1) based on an appearance of the target object in the input image. Specifically, the matching image (D1*) is one of the template images (D1) in which the display angle of the reference object is closest to an angle of the target object (hereinafter referred to as "target angle") shown in the input image.

To describe in further detail, the input image is, for example, a frame in a real-time video, and the processor 11 may obtain the input image by receiving the video from, for example, the capturing device 2 that is electrically connected to the processor 11 in real time. The target object is the actual target to be determined by the computing device 1 using the method, and may be an object that belongs to the specific type and that has substantially the same appearance as the reference object, or may be the reference object itself.

In this embodiment, the processor 11 selects the matching image (D1*) in the following manner. First, the processor 11 identifies a plurality of feature parts of the target object (hereinafter referred to as "target feature parts") shown in the input image by, for example, performing image recognition on the input image. Specifically, the processor 11 may identify the target feature parts shown in the input image based on the reference feature parts defined by the feature markers in the original template image (D1'). Therefore, with respect to each of the template images (D1), the target feature parts shown in the input image should respectively correspond to the reference feature parts that are defined by the feature markers of the template image (D1) and that are shown in the template image (D1).

After determining the target feature parts shown in the input image, the processor 11 generates a target feature dataset that corresponds to the input image based on the target feature parts shown in the input image. Similar to the reference feature datasets (D3), the target feature dataset in this embodiment is implemented as a vector that includes a plurality of components (e.g., 2304 components), and indicates an appearance feature of the target object at the target angle shown in the input image using the components, where the appearance feature only exists when the target object is oriented at the target angle when viewed from the capturing perspective.

After generating the target feature dataset, the processor 11 calculates, for each of the reference feature datasets (D3), a degree of matching between the target feature dataset and the reference feature dataset (D3). Specifically, since the target feature dataset and the reference feature datasets (D3) in this embodiment are each represented by a vector, the processor 11 may calculate, for each of the reference feature datasets (D3), a Minkowski distance between the target feature dataset and the reference feature dataset (D3), and make the Minkowski distance thus calculated serve as the degree of matching, but the disclosure is not limited to such. It should be noted that the smaller the Minkowski distance is between the vector representing the target feature dataset and the vector representing any one of the reference feature datasets (D3), the closer the two vectors are with each other, which means the closer the target angle in the input image is to the display angle of the reference object shown in the corresponding one of the template images (D1).

After calculating the degree of matching between the target feature dataset and each of the reference feature datasets (D3), the processor 11 selects one of the template images (D1) that corresponds to the reference feature dataset (D3) which has the highest degree of matching with the target feature dataset among the template images as the matching image (D1*). As such, assuming that the target angle in the input image deviates from the reference angle by 21.5 degrees, the processor 11 would select one of the template images (D1) that corresponds to the deflection angle of 20 degrees as the matching image (D1*) (i.e., selecting one of the template images (D1) that has the display angle of the reference object most similar to the target angle in the input image).

After the processor 11 selects the matching image (D1*) from among the template images (D1), the flow proceeds to step S7.

In step S7, the processor 11 performs a keypoint matching procedure based on the input image and the matching image (D1*), so as to identify a plurality of first feature points that are shown in the input image and that are related to the appearance of the target object, and a plurality of second feature points that are shown in the matching image (D1*) and that respectively match with the first feature points. Specifically, each one of the first feature points is homogeneous with one of the second feature points in a one-to-one relationship (i.e., each one of the first feature points is homogeneous with one of the second feature points, and vice versa). In this embodiment, the processor 11 performs the keypoint matching procedure using Se2-LoFTR (Local Feature TRansformer) neural network. In some embodiments, the processor 11 performs the keypoint matching procedure using other types of neural network, such as Coarse-LoFTR, LoFTR, or SuperGLUE, but the disclosure is not limited to such.

After the processor 11 identifies the first feature points and the second feature points, the flow proceeds to step S8.

In step S8, the processor 11 generates a calibration dataset based on the first feature points and the second feature points. The calibration dataset is implemented in a form of a matrix, and indicates relationships among the first feature points and the second feature points. Specifically, the calibration dataset indicates, for each one of the first feature points, the relationship between the first feature point and a corresponding one of the second feature points using the six degrees of freedom in three-dimensional space, so as to indicate a pose of the target object in the input image relative to the pose of the reference object in the matching image (D1*) in terms of the six degrees of freedom (i.e., differences in position and angle).

After the processor 11 generates the calibration dataset, the flow proceeds to step S9.

In step S9, the processor 11 generates a pose-determination result that indicates the pose of the target object based on one of the reference pose datasets (D2) that corresponds to the matching image (D1 *), and on the calibration dataset (which indicates relationships among the first feature points and the second feature points). Specifically, the pose-determination result indicates a difference between the pose of the target object in the input image and the reference pose using the six degrees of freedom, so as to indicate the pose of the target object in the input image relative to the pose of the reference object shown in the original template image (D1') in terms of the six degrees of freedom. To describe in further detail, the reference pose dataset (D2) that corresponds to the matching image (D1*), and the calibration dataset in this embodiment are each represented by a matrix. Assuming that the matrix representing the reference pose dataset (D2) that corresponds to the matching image (D1*) is a first matrix (e.g., M1), and the matrix representing the calibration dataset is a second matrix (e.g., M2), then the pose-determination result in this embodiment is generated by multiplying the second matrix by the first matrix (i.e., M2M1). The flow of the method ends.

In this embodiment, the pose-determination result may be converted, through a coordinate system mapping method of existing technology, to a position coordinate set and a deviation angle in another coordinate system (e.g., a coordinate system of a robotic arm) in terms of the six degrees of freedom. Furthermore, after the processor 11 generates the pose-determination result, the processor 11 may, for example, further perform an automated procedure on the target object based on the pose-determination result. In one example, the automated procedure may include grabbing and moving the target object with the robotic arm (not shown), or may include performing processing or machining on the target object (e.g., welding, gluing, or cutting). In some embodiments, after the processor 11 generates the pose-determination result, the processor 11 may send the pose-determination result to an automated system that performs the automated procedure on the target object, so as to allow the automated system to operate on the target object based on the pose-determination result. Since the pose-determination result has a variety of applications, this embodiment does not place restrictions on operations after the processor 11 generates the pose-determination result.

It should be noted that steps S1 to S9 and the flow chart shown in Figure 2 merely constitute one example of the disclosure, and steps S1 to S9 may be combined, divided, or switched in order as long as the method under such adjustment achieves substantially the same function in substantially the same way as provided in the embodiment. In one example, after the processor 11 obtains the original template image (D1') (i.e., step S1), the processor 11 may first generate the produced template images (D1") based on the original template image (D1') (i.e., step S3), and then generate the reference pose datasets (D2) that correspond respectively to the template images (D1), and the reference feature datasets (D3) that correspond respectively to the template images (D1) (i.e., step S2 and step S4). Therefore, the disclosure is not limited to the flow chart shown in Figure 2.

In summary, by implementing the method for determining a pose of a target object, the computing device 1 only requires one template image (D1) that contains a reference object belonging to a specific type to which the target object belongs (i.e., the original template image (D1')) to generate the produced template images (D1") by rotating the original template image (D1'), so as to generate the database (DB1) that corresponds to the specific type and that includes the reference pose datasets (D2) and the reference feature datasets (D3). In addition, after generating the database (DB1), when the computing device 1 obtains the input image that contains the target object, the computing device 1 is capable of first selecting the matching image (D1*) that best matches with the input image based on the reference feature datasets (D3) in the database (DB1), then performing the keypoint matching procedure based on the input image and the matching image (D1*), so as to generate the calibration dataset, and finally generating the pose-determination result based on the calibration dataset and the reference pose dataset (D2) that corresponds to the matching image (D1*), thus determining the pose of the target object.

It should be noted that even though artificial neural network may be used to determine the pose of the target object, the artificial neural network is required to perform deep learning on the appearance of the target object in advance, and thus multiple images of the target object taken from different angles are required for training the artificial neural network. Compared to using the artificial neural network with deep learning, the computing device 1 according to the disclosure only requires one template image (D1) that shows the target object (i.e., the original template image (D1')) to generate the database (DB1) that corresponds to the specific type, without requiring the multiple images of the target object taken from different angles. On the other hand, a time required for the processor 11 to generate the database (DB1) based on the original template image (D1') is much less than a time required for the artificial neural network to perform deep learning. Therefore the disclosure saves manpower and time compared to using the artificial neural network, and the saving of manpower and time would be more significant when the object to be determined may change (e.g., from the target object described in the embodiment to a different object).

In the description above, for the purposes of explanation, numerous specific details have been set forth in order to provide a thorough understanding of the embodiment(s). It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects; such does not mean that every one of these features needs to be practiced with the presence of all the other features. In other words, in any described embodiment, when implementation of one or more features or specific details does not affect implementation of another one or more features or specific details, said one or more features may be singled out and practiced alone without said another one or more features or specific details. It should be further noted that one or more features or specific details from one embodiment may be practiced together with one or more features or specific details from another embodiment, where appropriate, in the practice of the disclosure.

## Claims

1. A method for determining a pose of a target object, the method to be implemented by a computing device that stores a database related to a specific type to which the target object belongs, the database including a plurality of template images each containing a reference object that belongs to the specific type, the template images corresponding respectively to different deflection angles that are relative to a reference angle in which the reference object is captured, the method being **characterized by**:
obtaining an input image that contains the target object belonging to the specific type;
selecting a matching image that best matches with the input image from among the template images in the database based on an appearance of the target object in the input image, wherein the matching image is one of the template images in which an angle of the reference object shown in the template image is closest to an angle of the target object shown in the input image;
performing a keypoint matching procedure based on the input image and the matching image, so as to identify a plurality of first feature points that are shown in the input image and that are related to the appearance of the target object, and a plurality of second feature points that are shown in the matching image and that respectively match with the first feature points; and
generating a pose-determination result that indicates the pose of the target object based on relationships among the first feature points and the second feature points.

2. The method as claimed in claim 1, the database further including a plurality of reference feature datasets that correspond respectively to the template images, each of the reference feature datasets indicating an appearance feature of the reference object at the angle shown in the corresponding one of the template images, wherein selecting a matching image includes:
generating a target feature dataset that corresponds to the input image based on a plurality of feature parts of the target object shown in the input image, where the target feature dataset indicates an appearance feature of the target object at the angle shown in the input image;
calculating, for each of the reference feature datasets, a degree of matching between the target feature dataset and the reference feature dataset; and
selecting, as the matching image, one of the template images that corresponds to the reference feature dataset having a highest degree of matching with the target feature dataset among the template images.

3. The method as claimed in claim 2, wherein the target feature dataset and the reference feature datasets are each represented by a vector, and calculating a degree of matching includes calculating, for each of the reference feature datasets, a Minkowski distance between the target feature dataset and the reference feature dataset.

4. The method as claimed in claim 2, the template images including an original template image and a plurality of produced template images, the method further comprising, before obtaining an input image and selecting a matching image:
obtaining the original template image;
generating the reference feature dataset that corresponds to the original template image based on the original template image;
generating the produced template images by rotating the original template image multiple times, respectively; and
generating the reference feature datasets that correspond respectively to the produced template images based on the produced template images.

5. The method as claimed in claim 4, wherein generating the produced template images includes generating the produced template images each by rotating the original template image at the corresponding one of the deflection angles that corresponds to the produced template images.

6. The method as claimed in claim 2, the database further including a plurality of reference pose datasets that correspond respectively to the template images, each of the reference pose datasets indicating a pose of the reference object shown in the corresponding one of the template images, wherein:
performing a keypoint matching procedure further includes generating a calibration dataset based on the first feature points and the second feature points, where the calibration dataset indicates the relationships among the first feature points and the second feature points, and
the pose-determination result is generated based on the reference pose dataset that corresponds to the matching image, and on the calibration dataset.

7. The method as claimed in claim 6, wherein each one of the first feature points is homogeneous with one of the second feature points in a one-to-one relationship, and the calibration dataset indicates, for each one of the first feature points, the relationship between the first feature point and the respective one of the second feature points using six degrees of freedom in three-dimensional space.

8. A computing device (1) for determining a pose of a target object **characterized by**:
a processor (11); and
a storage medium (12) electrically connected to said processor (11) and configured to store a database, the database being related to a specific type to which the target object belongs, and including a plurality of template images each containing a reference object that belongs to the specific type, the template images corresponding respectively to different deflection angles that are relative to a reference angle in which the reference object is captured;
wherein said processor (11) is configured to:
obtain an input image that contains a target object belonging to the specific type,
select a matching image that best matches with the input image from among the template images in the database based on an appearance of the target object in the input image, where the matching image is one of the template images in which an angle of the reference object shown in the template image is closest to an angle of the target object shown in the input image,
perform a keypoint matching procedure based on the input image and the matching image, so as to identify a plurality of first feature points that are shown in the input image and that are related to the appearance of the target object, and a plurality of second feature points that are shown in the matching image and that respectively match with the first feature points, and
generate a pose-determination result that indicates the pose of the target object based on relationships among the first feature points and the second feature points.

9. The computing device (1) as claimed in claim 8, wherein:
the database further includes a plurality of reference feature datasets that correspond respectively to the template images, each of the reference feature datasets indicates an appearance feature of the reference object at the angle shown in the corresponding one of the template images, and
said processor (11) is further configured to select the matching image by
generating a target feature dataset that corresponds to the input image based on a plurality of feature parts of the target object shown in the input image, where the target feature dataset indicates an appearance feature of the target object at the angle shown in the input image,
calculating, for each of the reference feature datasets, a degree of matching between the target feature dataset and the reference feature dataset, and
selecting, as the matching image, one of the template images that corresponds to the reference feature dataset having a highest degree of matching with the target feature dataset among the template images.

10. The computing device (1) as claimed in claim 9, wherein the target feature dataset and the reference feature datasets are each represented by a vector, and said processor (11) is configured to calculate the degree of matching by calculating, for each of the reference feature datasets, a Minkowski distance between the target feature dataset and the reference feature dataset.

11. The computing device (1) as claimed in claim 9, wherein the template images include an original template image and a plurality of produced template images, and said processor (11) is further configured to, before obtaining the input image and selecting the matching image:
obtain the original template image;
generate the reference feature dataset that corresponds to the original template image based on the original template image;
generate the produced template images by rotating the original template image multiple times, respectively; and
generate the reference feature datasets that correspond respectively to the produced template images based on the produced template images.

12. The computing device (1) as claimed in claim 11, wherein said processor (11) is configured to generate the produced template images each by rotating the original template image at the corresponding one of the deflection angles that corresponds to the produced template image.

13. The computing device (1) as claimed in claim 9, wherein
the database further includes a plurality of reference pose datasets that correspond respectively to the template images, each of the reference pose datasets indicates a pose of the reference object shown in the corresponding one of the template images,
said processor (11) is further configured to generate a calibration dataset based on the first feature points and the second feature points, where the calibration dataset indicates the relationships among the first feature points and the second feature points, and
said processor (11) is configured to generate the pose-determination result based on the reference pose dataset that corresponds to the matching image, and on the calibration dataset.

14. The computing device (1) as claimed in claim 13, wherein each one of the first feature points is homogeneous with one of the second feature points in a one-to-one relationship, and the calibration dataset indicates, for each one of the first feature points, the relationship between the first feature point and the respective one of the second feature points using six degrees of freedom in three-dimensional space.
